# EUROPEAN PATENT SPECIFICATION

(11) **EP 3 829 105 B1**
(45) Date of publication and mention of the grant of the patent: **10.05.2023**
(21) Application number: 21163678.2
(22) Date of filing: 19.03.2021
(51) Int. Cl.: H04L 9/00, H04L 9/40, H04L 9/32, G06F 16/901

(54) **BLOCKCHAIN OPERATION METHOD AND APPARATUS, DEVICE AND STORAGE MEDIUM**
VERFAHREN UND EINRICHTUNG FÜR BLOCKCHAIN-OPERATION, VORRICHTUNG UND SPEICHERMEDIUM
PROCÉDÉ ET APPAREIL DE FONCTIONNEMENT DE CHAÎNE DE BLOCS, DISPOSITIF ET SUPPORT D'ENREGISTREMENT

(30) Priority: 22.07.2020 CN 202010708130
(43) Date of publication of application: 02.06.2021
(73) Proprietor: BAIDU ONLINE NETWORK TECHNOLOGY (BEIJING) CO., LTD., Beijing 100085 (CN)
(72) Inventor: JING, Bo, BEIJING 100085 (CN)
(74) Representative: IPAZ

(56) References cited:
- CN-B- 107 733 651
- US-A1- 2019 014 149
- US-A1- 2020 076 603

## Description

### TECHNICAL FIELD

The present application relates to a field of computer technology, particularly to blockchain technology, and more particularly to a blockchain operation method and apparatus, a device and a storage medium.

### BACKGROUND

The consensus mechanism is an important component of the blockchain technology, and an objective thereof is to enable all honest nodes to keep a consistent blockchain view. In an existing blockchain open network, the Proof of Work (POW) mechanism plays an important role, and is also the most mature consensus mechanism at present. US 2019/014149 A1, US 2020/076603 A and CN 107 733 651 B disclose some known methods.

### SUMMARY

The present invention provides a blockchain operation method according to claim 1 and an apparatus according to claim 6. A device according to the present invention is defined in claim 12. A storage medium according to the present invention is defined in claim 13. The dependent claims show some examples of such a method and apparatus respectively. The present application provides a blockchain operation method and apparatus, a device and a storage medium, which achieve a higher decentralization degree and a better stability and security of a blockchain network.

It should be understood that the content described in this section is intended to neither identify the key or important features of the embodiments of the present application, nor limit the scope of the present application. Other features of the present application will be readily understood through the following description.

### BRIEF DESCRIPTION OF THE DRAWINGS

The accompanying drawings are provided for better understanding of the solution of the present application, rather than limiting the present application. Herein,
FIG. 1 is a flowchart of a blockchain operation method provided by an embodiment of the present application;
FIG. 2 is a flowchart of another blockchain operation method provided by an embodiment of the present application;
FIG. 3A is a flowchart of another blockchain operation method provided by an embodiment of the present application;
FIG. 3B is a schematic diagram of a generation process of a block to be broadcast provided by an embodiment of the present application;
FIG. 3C is a schematic structural diagram of a block body of a genesis block provided by an embodiment of the present application;
FIG. 3D is a schematic structural diagram of a block body of a non-genesis block provided by an embodiment of the present application;
FIG. 4 is a structural diagram of a blockchain operation apparatus provided by an embodiment of the present application;
FIG. 5 is a block diagram of an electronic device for implementing a blockchain operation method provided by an embodiment of the present application.

### DETAILED DESCRIPTION OF THE EMBODIMENTS

Exemplary embodiments of the present application are described below in combination with the accompanying drawings, including various details of the embodiments of the present application to facilitate the understanding, and they should be considered as merely exemplary. Thus, it should be realized by those of ordinary skill in the art that various changes and modifications can be made to the embodiments described here without departing from the scope of the present application. Also, for the sake of clarity and conciseness, the contents of well-known functions and structures are omitted in the following description.

The original intention of the POW consensus algorithm is to achieve decentralization. However, with the emergence of the mining pool technology, several large mining pools will master most of computing power in a blockchain network, which makes the blockchain network to become more and more centralized and lose its credibility gradually. At the same time, there will be mining pool attacks, which affect the stability and security of the blockchain network.

Each blockchain operation method and blockchain operation apparatus provided by the present application are applicable to the situations where each blockchain node competes for a block generation right and generates a block based on a consensus mechanism in a blockchain network. Each blockchain operation method may be performed by a blockchain operation apparatus which is implemented by software and/or hardware and is specifically configured in an electronic device bearing blockchain nodes.

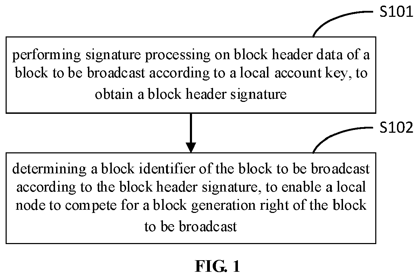

FIG. 1 is a flowchart of a blockchain operation method provided by an embodiment of the present application, and the method may include:
S101: performing signature processing on block header data of a block to be broadcast according to a local account key, to obtain a block header signature.

Herein, the block header data can be understood as part or all of data included in a block header of the block to be broadcast. The local account key may be an account private key corresponding to a blockchain account of a local node.

For example, based on a signature algorithm, signature processing is performed on the block header data of the block to be broadcast by using the account key of the local node, to obtain the block header signature.

S102: determining a block identifier of the block to be broadcast according to the block header signature, to enable a local node to compete for a block generation right of the block to be broadcast.

According to the technology of the present application, the decentralization degree of the blockchain network and the stability and security of the blockchain network are improved.

Exemplarily, the block identifier of the block to be broadcast is determined according to the block header signature based on the consensus algorithm, so that the local node and other nodes in the blockchain network can compete for the block generation right of the block to be broadcast. Accordingly, a node winning the competition for the block generation right of the block to be broadcast chains a block to be broadcast generated by the node itself and transmits it to the blockchain network, so that the correctness and validity of the block to be broadcast are verified by other nodes.

In an optional implementation of the embodiment of the present application, the block to be broadcast may be generated by executing a transaction request to be processed including an element reward transaction request, and generating transaction data and adding the transaction data to the block to be broadcast; wherein the element reward transaction request is used to transfer a block generation element reward of the local node and/or an element reward of a transaction request execution process to an own blockchain account.

Herein, the transaction request to be processed can be understood as a request initiated by a blockchain user in order to achieve a certain service function; accordingly, the blockchain node provides a corresponding service to the blockchain user by executing the transaction request to be processed, and obtains an element reward for executing the transaction request to be processed.

Exemplarily, the transaction request to be processed may be classified into an element transfer transaction request and a normal transaction request according to a request type of the transaction request. Herein, the element transfer transaction request is used to transfer an unfrozen element in the blockchain account to an element management account. Herein, an activity of the element management account is lower than that of the blockchain account. It can be understood that the security of elements obtained by the user can be improved by transferring the unfrozen element in the blockchain account to the element management account with a relatively low activity.

Generally, the element reward for executing the element transfer transaction request is more than that for executing the normal transaction request. In order to maximize the benefit of the block generation node, in an optional implementation of the embodiment of the present application, it may be identified in advance whether there is an element transfer transaction request in the transaction request to be processed. If there is an element transfer transaction request in the transaction request to be processed, a transaction request to be processed including an element transfer transaction request and an element reward transaction request is executed; otherwise, a transaction request to be processed including a normal transaction request and an element reward transaction request is executed.

Exemplarily, it may be identified whether the transaction request to be processed is an element transfer transaction request according to a request type of the transaction request to be processed. Accordingly, the element transfer transaction request is preferentially selected for processing.

Optionally, in a case where the element transfer transaction request is executed, element transfer transaction data is generated and added to a block body of the block to be broadcast; and in a case where the normal transaction request is executed, normal transaction data is generated and added to the block body of the block to be broadcast. When the block to be broadcast meets a block generation restriction condition, signature processing is performed on block content in the block body according to an own account key, to perform a block verification, and blocks are packed. Herein, the block generation restriction condition may be a longest block generation time interval, or reaching a maximum block size, etc.

Specifically, in a case where the block to be broadcast is a genesis block, the transaction request to be processed in the blockchain network cannot include an element transfer transaction request, thus it is unnecessary to identify the element transfer transaction request; and in a case where the block to be broadcast is a non-genesis block, an operation of identifying the element transfer transaction request will be triggered.

It should be noted that in the prior art, a mining pool administrator may allocate block generation right computation burdens to other nodes in the mining pool by allocating random number segmentations to other nodes in the mining pool, so that other nodes can carry out computation for some random numbers and assist the mining pool administrator to compete for the block generation right. Due to the participation of other nodes in the computation, a blockchain node serving as the mining pool administrator has a higher probability to win the competition for the block generation right, which makes the blockchain network to become more and more centralized and begin to lose its credibility. Meanwhile, a problem of mining pool computing power attack may also be existed, which leads to the occurrence of double-flower transactions, etc., and reduces the security and stability of the blockchain network.

In the embodiment of the present application, signature processing is performed on block header data of a block to be broadcast according to a local account key, to obtain a block header signature; and a block identifier of the block to be broadcast is determined according to the block header signature, to enable a local node to compete for a block generation right of the block to be broadcast. According to the above technical solution, the competition for the block generation right is carried out by introducing a local account key of the local node, so that other nodes in the mining pool cannot help the mining pool administrator to compete for the block generation right in a case where the mining pool administrator does not share the local account key of the local node with other nodes in the mining pool; however, in a case where the mining pool administrator shares the local account key with other nodes, the security of the own account of the mining pool administrator will be threatened. Therefore, by introducing the local account key in the process of competing for the block generation right, the present application can prevent a plurality of nodes from masquerading as a same node to compete for the block generation right, and improve a decentralization degree of the blockchain network, thereby improving the stability and security of the blockchain network.

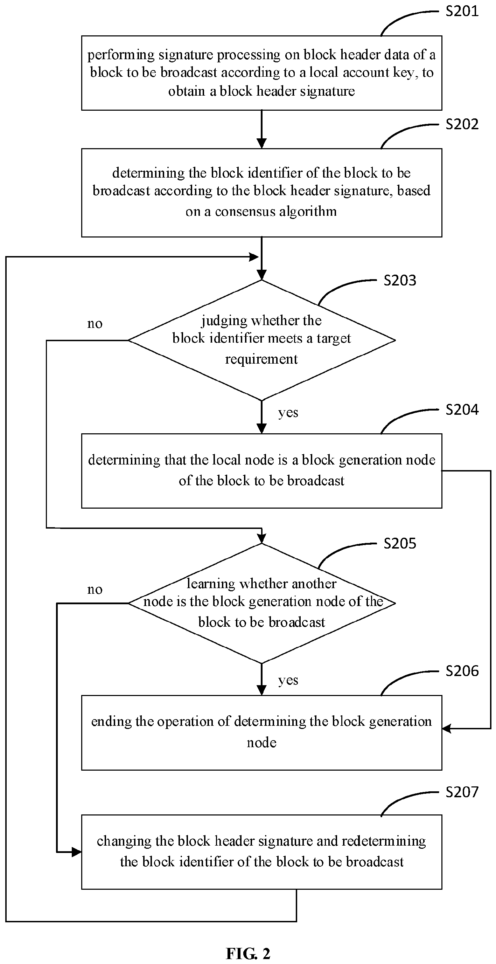

FIG. 2 is a flowchart of another blockchain operation method provided by an embodiment of the present application, and this method is optimized and improved on the basis of the above technical solutions.

Further, the operation 'determining a block identifier of the block to be broadcast according to the block header signature, to enable a local node to compete for a block generation right of the block to be broadcast' is subdivided into `determining the block identifier of the block to be broadcast according to the block header signature, based on a consensus algorithm; in a case where the block identifier meets a target requirement, determining that the local node is a block generation node of the block to be broadcast; and in a case where the block identifier does not meet the target requirement, changing the block header signature and redetermining the block identifier of the block to be broadcast, until it is determined that the local node is the block generation node of the block to be broadcast, or it is learned that another node is the block generation node of the block to be broadcast', so as to improve the competition mechanism of the block generation right.

As shown in FIG. 2, a blockchain operation method may include:
S201: performing signature processing on block header data of a block to be broadcast according to a local account key, to obtain a block header signature.

Exemplarily, based on a signature algorithm, the signature processing is performed on the block header data of the block to be broadcast according to the local account key, to obtain the block header signature.

Optionally, the obtained block header signature may be added to the block header for subsequent computation of a block identifier.

S202: determining the block identifier of the block to be broadcast according to the block header signature, based on a consensus algorithm.

Herein, the consensus algorithm is used for puzzle computation, so as to determine the block generation node in the blockchain network by puzzle solving, and ensure that only one blockchain node performs the block generation operation each time in the blockchain network. Exemplarily, the consensus algorithm may include a POW algorithm.

Herein, input data of the consensus algorithm may include the block header signature, and output data of the consensus algorithm may include the block identifier. Herein, the block header signature is generated based on a signature random number, and the block header signature can be changed by varying the signature random number, so as to compute different block identifiers.

S203: judging whether the block identifier meets a target requirement; if so, performing S204; otherwise, performing S205.

Herein, the target requirement may be whether the obtained block identifier is less than a target value; if so, it means that the puzzle solving is successful and the POW is completed, that is, the local node wins the competition with other nodes in the blockchain system for the block generation right; otherwise, the computation of the block identifier is continued in a case where other block generation nodes have not won the competition for the block generation right.

S204: determining that the local node is a block generation node of the block to be broadcast; and skipping to execute S206.

Exemplarily, after determining that the local node is the block generation node of the block to be broadcast, the local node will perform a block generation operation of the block to be broadcast, i.e., adding the block to be broadcast to a locally maintained blockchain, and transmitting the block to be broadcast to the blockchain network for verification by other nodes, and perform a chaining operation on a block after the verification is successful.

After the block to be broadcast is transmitted to the blockchain network, there is a risk that the local account key may be leaked. In order to maintain the account security of the local node, the block generation node may further update the local account key for use in subsequent signature when or after the block generation operation of the block to be broadcast is performed. Herein, the account key may be an account private key.

Exemplarily, the local node may adopt a hierarchical deterministic wallet technology to regenerate the account private key and manage the generated account private key.

Generally, after performing the block generation operation, the block generation node will obtain the block generation element reward and the element reward for executing the transaction request. Because the own blockchain account has a high activity, the account security thereof is poor. In order to avoid the user from being troubled by the issue of the account security, the local node will usually transfer out the element reward obtained after the block generation from the own blockchain account. Under normal circumstances, in a case where the local node performs the block generation operation of the block to be broadcast, the obtained element reward is still in a frozen state and will not be unfrozen until a next block is generated. Therefore, the local node cannot directly perform an element transfer operation on the own blockchain account.

Exemplarily, the local node may generate an element transfer transaction request according to an own blockchain account, an element management account and a transfer amount; an activity of the element management account is lower than that of the blockchain account; and the local node may transmit the element transfer transaction request to the blockchain network, so that the element transfer transaction request is processed by a subsequent block generation node, to transfer elements to be transferred in the blockchain account to the element management account.

It should be noted that, because the account key of the local node is required in the element transfer process, in a case where the local node is the mining pool administrator, in a case where the mining pool administrator shares the local account key with other nodes in the mining pool, other nodes may transfer the elements in the blockchain account of the mining pool administrator to their own element management accounts through the account key shared by the mining pool administrator after the mining pool administrator completes the block generation operation, as a result, it is unprofitable for the mining pool administrator. Therefore, from the perspective of self-interest, by introducing the local account key of the blockchain node in the process of competing for the block generation right, the mining pool in the blockchain network can be restrained, thus ensuring the decentralization of the blockchain network and improving the security and stability of the blockchain network.

Optionally, the element management account may be a cold wallet account.

S205: learning whether another node is the block generation node of the block to be broadcast; if so, performing S206; otherwise, performing S207.

When the local node failing in the competition for the block generation right learns that other nodes also have not yet won the competition for the block generation right, the proof of work is continued by changing the block header signature and redetermining the block identifier; and in a case where the local node failing in the competition for the block generation right learns that another node is the block generation node of the block to be broadcast, i.e., in a case where another node wins the competition for the block generation right, the operation of determining the block generation node is ended, i.e., the proof of work operation this time is terminated, to avoid the waste of computing resources.

S206: ending the operation of determining the block generation node.

S207: changing the block header signature and redetermining the block identifier of the block to be broadcast; and returning to S203.

In an optional implementation of the embodiment of the present application, the changing the block header signature may include: adjusting a signature random number in a signature algorithm; and performing the signature processing on the block header data of the block to be broadcast according to the signature random number and the local account key, to change the block header signature.

It can be understood that, by adjusting the signature random number, it can be ensured that when the block header signature is to be changed every time, the signature processing needs to be performed anew by means of the local account key, thereby avoiding the mining pool administrator from allocating the block generation right competition computation to other nodes for auxiliary computation while ensuring that the process of competing for the block generation right is smooth, which lays a foundation for the decentralization of the blockchain network and guarantees the stability and security of the blockchain network.

In another optional implementation of the embodiment of the present application, the changing the block header signature may include: adjusting a block random number in the block header data; and performing the signature processing on the adjusted block header data according to the local account key, to change the block header signature.

It can be understood that, by adjusting the block random number in the block header data, it can be ensured that when the block header signature is to be changed every time, the signature processing needs to be performed anew by means of the local account key, thereby avoiding the mining pool administrator from allocating the block generation right competition computation to other nodes for auxiliary computation while ensuring that the process of competing for the block generation right is smooth, which lays a foundation for the decentralization of the blockchain network and guarantees the stability and security of the blockchain network.

It should be noted that the adjustments of both the signature random number and the block random number may be executed alternatively or simultaneously. Of course, in order to facilitate the computation and improve the competition efficiency of the block generation right, the signature random number and the block random number may be alternatively adjusted according to the situation of inclusion of the signature random number in the signature algorithm, so that the block header signature is changed according to the adjusted random number.

According to the embodiment of the present application, the operation of competing for the block generation right of the block to be broadcast by the local node is subdivided as follows: determining the block identifier of the block to be broadcast according to the block header signature based on a consensus algorithm; in a case where the block identifier meets a target requirement, determining that the local node is a block generation node of the block to be broadcast; and in a case where the block identifier does not meet the target requirement, changing the block header signature and redetermining the block identifier of the block to be broadcast, until it is determined that the local node is the block generation node of the block to be broadcast, or it is learned that another node is the block generation node of the block to be broadcast. By adopting the above technical solution, on the basis of the existing consensus algorithm, the input data of the consensus algorithm can be changed to include the block header signature generated based on the account key of the local node, which limits the participation of the mining pool in the competition process of the block generation right, and improves the competition mechanism of the block generation right, while improving the decentralization degree of the blockchain network, thereby improving the stability and security of the blockchain network.

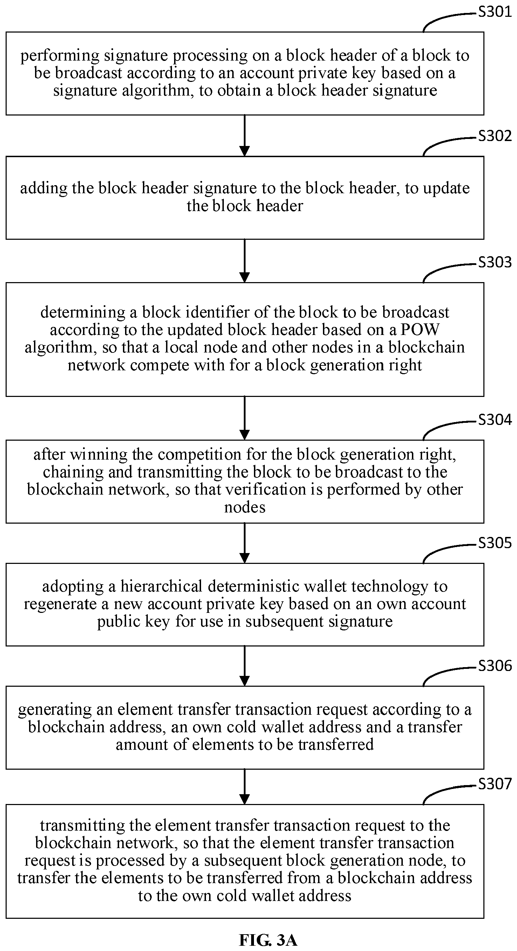

FIG. 3A is a flowchart of another blockchain operation method provided by an embodiment of the present application, and the method provides a preferred embodiment on the basis of the above technical solutions.

As shown in FIG. 3A, a blockchain operation method may include:
S301: performing signature processing on a block header of a block to be broadcast according to an account private key based on a signature algorithm, to obtain a block header signature.
S302: adding the block header signature to the block header, to update the block header.
S303: determining a block identifier of the block to be broadcast according to the updated block header based on a POW algorithm, so that a local node and other nodes in a blockchain network compete for a block generation right.

Exemplarily, in a case where the block identifier meets a target requirement, it is determined that the local node is the block generation node, i.e., the local node wins the competition for the block generation right of the block to be broadcast. If the block identifier does not meet the target requirement, the signature processing is performed on the block header data except the previous block header signature anew by adjusting a signature random number in the signature algorithm and using the account private key, to update the previous block header signature in the block header; or the signature processing is performed on the block header data except the previous block header signature anew by adjusting a block random number in the block header data and using the account private key, to update the previous block header signature in the block header; the block identifier of the block to be broadcast is redetermined based on the POW algorithm by using the new block header with the updated block header signature, until the local node wins the competition for the block generation right, or learns that another node wins the competition for the block generation right.

S304: after winning the competition for the block generation right, chaining and transmitting the block to be broadcast to the blockchain network, so that verification is performed by other nodes.

S305: adopting a hierarchical deterministic wallet technology to regenerate a new account private key based on an own account public key for use in subsequent signature.

S306: generating an element transfer transaction request according to a blockchain address, an own cold wallet address and a transfer amount of elements to be transferred; wherein the elements to be transferred include a block generation element reward and/or an element reward for executing the transaction request to be processed; the elements to be transferred change from a frozen state to an unfrozen state when a next block is generated.

S307: transmitting the element transfer transaction request to the blockchain network, so that the element transfer transaction request is processed by a subsequent block generation node, to transfer the elements to be transferred from the blockchain address to the own cold wallet address.

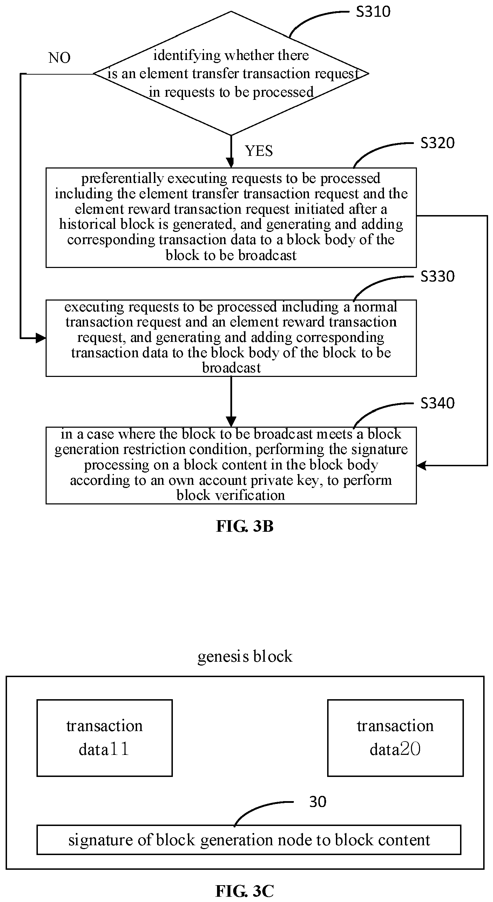

Referring to a schematic diagram of a generation process of the block to be broadcast shown in FIG. 3B, the generation process may include:
S310: identifying whether there is an element transfer transaction request in requests to be processed; if so, performing S320, otherwise, performing S330.

Herein, the identifying whether there is the element transfer transaction request in the requests to be processed may include identifying whether the block to be broadcast is a genesis block in advance; if so, directly executing the requests to be processed including a normal transaction request and a block generation reward transaction request without identifying the element transfer transaction request; otherwise, selecting the element transfer transaction request from the requests to be processed according to a request type, wherein the request type may include an element transfer type and a non-element transfer type.

S320: preferentially executing the requests to be processed including the element transfer transaction request and the element reward transaction request initiated after a historical block is generated, and generating and adding corresponding transaction data to a block body of the block to be broadcast. Next, S340 is executed.

Herein, the element reward transaction request is used to transfer the block generation element reward of the local node and the element reward of the transaction request execution process to the own blockchain account of the local node.

S330: executing requests to be processed including a normal transaction request and an element reward transaction request, and generating and adding corresponding transaction data to the block body of the block to be broadcast. Next, S340 is executed.

S340: in a case where the block to be broadcast meets a block generation restriction condition, performing the signature processing on a block content in the block body according to an own account private key, to perform block verification.

Referring to the schematic structural diagram of a block body of a genesis block shown in FIG. 3C, the block body may include transaction data 11 generated by executing an element reward transaction request, transaction data 20 generated by executing a normal transaction request, and a signature 30 of the block generation node to the block content.

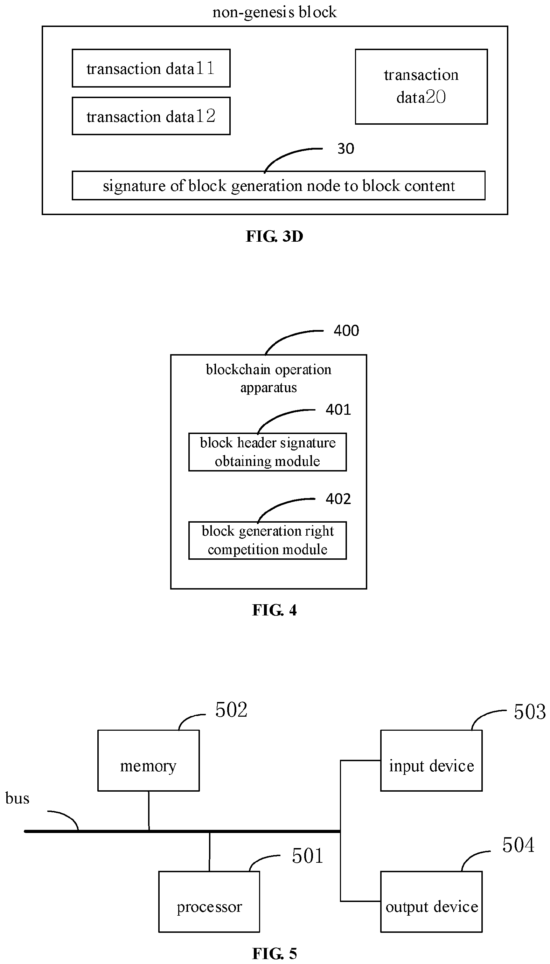

Referring to the schematic structural diagram of a block body of a non-genesis block shown in FIG. 3D, the block body may include transaction data 11 generated by executing an element reward transaction request, transaction data 12 generated by executing an element transfer transaction request initiated by a historical block generation node, transaction data 20 generated by executing a normal transaction request, and a signature 30 of the block generation node to the block content.

It should be noted that FIGS. 3C and 3D only schematically illustrate the structures of the block bodies in the genesis block and the non-genesis block, respectively, rather than making any limitation to the storage spatial order of the contents included in the block bodies.

In the present application, the account private key is introduced in the process of competing for the block generation right, so that the mining pool administrator will not allocate the computation work to other nodes in the mining pool in the process of competing for the block generation right. If the mining pool administrator allocates the computation work to other nodes in the mining pool, the mining pool administrator also needs to share the account private key, otherwise the allocation cannot be made for the computation work; in a case where the mining pool administrator shares the account private key with other nodes in the mining pool, in a case where the block generation is successful, other nodes all may attempt to transfer the element reward after the block generation from the blockchain address of the mining pool administrator to their own cold wallet addresses by means of the account private key, and then it is unprofitable for the mining pool administrator and even may bring about loss to the mining pool administrator.

FIG. 4 is a structural diagram of a blockchain operation apparatus provided by an embodiment of the present application. The blockchain operation apparatus 400 may include a block header signature obtaining module 401 and a block generation right competition module 402.

The block header signature obtaining module 401 is configured to perform signature processing on block header data of a block to be broadcast according to a local account key, to obtain a block header signature.

The block generation right competition module 402 is configured to determine a block identifier of the block to be broadcast according to the block header signature, to enable a local node to compete for a block generation right of the block to be broadcast.

In the embodiment of the present application, the block header signature obtaining module obtains the block header signature by perform the signature processing on the block header data of the block to be broadcast according to the local account key, and the block generation right competition module determines the block identifier of the block to be broadcast according to the block header signature, to enable the local node to compete for the block generation right of the block to be broadcast. According to the above technical solution, the competition for the block generation right is carried out by introducing a local account key of the local node, so that other nodes in the mining pool cannot help the mining pool administrator to compete for the block generation right in a case where the mining pool administrator does not share the local account key of the local node with other nodes in the mining pool; however, in a case where the mining pool administrator shares the local account key with other nodes, the security of the own account of the mining pool administrator will be threatened. Therefore, by introducing the local account key in the process of competing for the block generation right, the present application can prevent a plurality of nodes from masquerading as a same node to compete for the block generation right, and improve a decentralization degree of the blockchain network, thereby improving the stability and security of the blockchain network.

Further, the block generation right competition module 402 may include:
a block identifier determination unit configured to determine the block identifier of the block to be broadcast according to the block header signature, based on a consensus algorithm;
a block generation node determination unit configured to, in a case where the block identifier meets a target requirement, determine that the local node is a block generation node of the block to be broadcast; and
a block header signature changing unit configured to, in a case where the block identifier does not meet the target requirement, change the block header signature and redetermine the block identifier of the block to be broadcast, until it is determined that the local node is the block generation node of the block to be broadcast, or it is learned that another node is the block generation node of the block to be broadcast.

Further, the block header signature changing unit may include:
a signature random number adjustment subunit configured to adjust a signature random number in a signature algorithm; and
a block header signature changing subunit configured to perform the signature processing on the block header data of the block to be broadcast according to the signature random number and the local account key, to change the block header signature.

Further, the block header signature changing unit may include:
a block random number adjustment subunit configured to adjust a block random number in the block header data; and
a block header signature changing subunit configured to perform the signature processing on the adjusted block header data according to the local account key, so as to change the block header signature.

Further, the consensus algorithm may include a proof of work (POW) algorithm.

Further, in a case where the local node is the block generation node, the apparatus may further include:
an account key updating module configured to perform a block generation operation on the block to be broadcast, and update the local account key for subsequent signature.

Further, in a case where the local node is the block generation node, the apparatus may further include:
an element transfer transaction request generation module configured to generate an element transfer transaction request according to an own blockchain account, an element management account and a transfer amount; an activity of the element management account being lower than that of the blockchain account; and
an element transfer transaction request transmission module configured to transmit the element transfer transaction request to a blockchain network so that the element transfer transaction request is processed by a subsequent block generation node, to transfer elements to be transferred in the blockchain account to the element management account.

The above blockchain operation apparatus can perform the blockchain operation method provided by any embodiment of the present invention, and has corresponding functional modules for performing the blockchain operation method and advantageous effects.

According to an embodiment of the present application, the present application further provides an electronic device and a readable storage medium.

FIG. 5 is a block diagram of an electronic device for implementing a blockchain operation method according to an embodiment of the present application. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the application described and/or claimed herein.

As shown in FIG. 5, the electronic device may include one or more processors 501, a memory 502, and interfaces for connecting components, including high-speed interfaces and lowspeed interfaces. The respective components are interconnected by different buses and may be mounted on a common main-board or otherwise as desired. The processor may process instructions executed within the electronic device, including instructions stored in or on the memory to display graphical information of a graphical user interface (GUI) on an external input/output device, such as a display device coupled to the interface. In other implementations, a plurality of processors and/or buses may be used with a plurality of memories, if necessary. Also, a plurality of electronic devices may be connected, each providing some of the necessary operations (e.g., as an array of servers, a set of blade servers, or a multiprocessor system). An example of a processor 501 is shown in Fig. 5.

The memory 502 is a non-transitory computer-readable storage medium provided by the present application. The memory stores instructions executable by at least one processor to cause the at least one processor to execute the blockchain operation method provided by the present application. The non-transitory computer-readable storage medium of the present application stores computer instructions for enabling a computer to execute the blockchain operation method provided by the present application.

The memory 502, as a non-transitory computer-readable storage medium, may be configured to store non-transitory software programs, non-transitory computer executable programs and modules, such as program instructions/modules corresponding to the blockchain operation method in the embodiments of the present application (for example, the block header signature obtaining module 401 and the block generation right competition module 402 as shown in FIG. 4). The processor 501 executes various functional applications and data processing of the server by running the non-transitory software programs, instructions and modules stored in the memory 902, that is, implements the blockchain operation method in the above method embodiments.

The memory 502 may include a program storage area and a data storage area, wherein the program storage area may store an operating system, and an application program required for at least one function; and the data storage area may store data created according to the use of the electronic device for implementing the blockchain operation method, etc. In addition, the memory 502 may include a high speed random access memory, and may also include a non-transitory memory, such as at least one disk storage device, a flash memory device, or other non-transitory solid state storage devices. In some embodiments, the memory 502 may optionally include memories remotely located with respect to the processor 501, and these remote memories may be connected, via a network, to the electronic device for implementing the blockchain operation method. Examples of such networks may include, but are not limited to, the Internet, an intranet, a local area network, a mobile communication network and combinations thereof.

The electronic device for implementing the blockchain operation method may further include an input device 503 and an output device 504. The processor 501, the memory 502, the input device 503, and the output device 504 may be connected by a bus or in other ways, and the bus connection is taken as an example in FIG. 5.

The input device 503 may receive input digitals or character information, and generate a key signal input related to a user setting and a function control of an electronic device for implementing the blockchain operation method. For example, the input device may be a touch screen, a keypad, a mouse, a track pad, a touch pad, a pointer stick, one or more mouse buttons, a track ball, a joystick, and other input devices. The output device 504 may include a display apparatus, an auxiliary lighting device (e.g., a light emitting diode (LED)), a tactile feedback device (e.g., a vibrating motor), etc. The display apparatus may include, but is not limited to, a liquid crystal display (LCD), an LED display, and a plasma display. In some embodiments, the display apparatus may be a touch screen.

Various implementations of the systems and techniques described herein may be implemented in a digital electronic circuit system, an integrated circuit system, an application specific integrated circuit (ASIC), a computer hardware, a firmware, a software, and/or a combination thereof. These various implementations may include an implementation in one or more computer programs, which can be executed and/or interpreted on a programmable system including at least one programmable processor; the programmable processor may be a dedicated or generalpurpose programmable processor and capable of receiving and transmitting data and instructions from and to a storage system, at least one input device, and at least one output device.

These computing programs (also referred to as programs, software, software applications, or codes) may include machine instructions of a programmable processor, and may be implemented using high-level procedural and/or object-oriented programming languages, and/or assembly/machine languages. As used herein, the terms "machine-readable medium" and "computer-readable medium" may refer to any computer program product, apparatus, and/or device (e.g., a magnetic disk, an optical disk, a memory, a programmable logic device (PLD)) for providing machine instructions and/or data to a programmable processor, including a machine-readable medium that receives machine instructions as machine-readable signals. The term "machine-readable signal" may refer to any signal used to provide machine instructions and/or data to a programmable processor.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), the Internet and a blockchain network.

The computer system may include a client and a server. The client and the server are typically remote from each other and typically interact via the communication network. The relationship of the client and the server is generated by computer programs running on respective computers and having a client-server relationship with each other. The server may be a cloud server, also called as a cloud computing server or a cloud host, which is a host product in a cloud computing service system, to solve the defects of difficult management and weak business expansibility in the services of the traditional physical host and the virtual private server (VPS).

According to the technical solution of the embodiments of the present application, the competition for the block generation right is carried out by introducing a local account key of the local node, so that other nodes in the mining pool cannot help the mining pool administrator to compete for the block generation right in a case where the mining pool administrator does not share the local account key of the local node with other nodes in the mining pool; however, in a case where the mining pool administrator shares the local account key with other nodes, the security of the own account of the mining pool administrator will be threatened. Therefore, by introducing the local account key in the process of competing for the block generation right, the present application can prevent a plurality of nodes from masquerading as a same node to compete for the block generation right, and improve a decentralization degree of the blockchain network, thereby improving the stability and security of the blockchain network.

It should be understood that the steps can be reordered, added or deleted using the various flows illustrated above. For example, the steps described in the present application may be performed concurrently, sequentially or in a different order, so long as the desired results of the technical solutions disclosed in the present application can be achieved, and there is no limitation herein.

The above-described specific embodiments do not limit the scope of the present application. It will be apparent to those skilled in the art that various modifications, combinations, sub-combinations and substitutions are possible, depending on design requirements and other factors. Any modifications, equivalent substitutions, and improvements within the principles of this application are intended to be included within the scope of this application.

## Claims

1. A blockchain operation method, comprising:
performing (S101) signature processing on block header data of a block to be broadcast according to a local account key of a local node, to obtain a block header signature; and
determining (S 102) a block identifier of the block to be broadcast according to the block header signature, to enable the local node and other nodes in a blockchain network to compete for a block generation right of the block to be broadcast; wherein the local node and the other nodes belong to a mining pool;
wherein, in a case where the local node is the block generation node and administrator of the mining pool, the method further comprises:
performing a block generation operation on the block to be broadcast, and updating the local account key for subsequent signature.

2. The blockchain operation method according to claim 1, wherein the determining the block identifier of the block to be broadcast according to the block header signature, to enable the local node and the other nodes of the blockchain network to compete for the block generation right of the block to be broadcast comprises:
determining (S202) the block identifier of the block to be broadcast according to the block header signature, based on a consensus algorithm;
in a case where the block identifier meets a target requirement, determining (S204) that the local node is a block generation node of the block to be broadcast; and
in a case where the block identifier does not meet the target requirement, changing (S207) the block header signature and redetermining the block identifier of the block to be broadcast, until it is determined that the local node is the block generation node of the block to be broadcast, or it is learned that another node is the block generation node of the block to be broadcast.

3. The blockchain operation method according to claim 2, wherein the changing the block header signature comprises:
adjusting a signature random number in a signature algorithm; and
performing the signature processing on the block header data of the block to be broadcast according to the signature random number and the local account key, to change the block header signature, or
wherein the changing the block header signature comprises:
adjusting a block random number in the block header data; and
performing the signature processing on the adjusted block header data according to the local account key, to change the block header signature.

4. The blockchain operation method according to claim 2 or 3, wherein the consensus algorithm includes a proof of work POW algorithm.

5. The blockchain operation method according to any one of claims 1 to 4, wherein, in a case where the local node is the block generation node, the method further comprises:
generating an element transfer transaction request according to an own blockchain account, an element management account and a transfer amount; an activity of the element management account being lower than that of the blockchain account; and
transmitting the element transfer transaction request to the blockchain network so that the element transfer transaction request is processed by a subsequent block generation node, to transfer elements to be transferred in the blockchain account to the element management account.

6. A blockchain operation apparatus (400), comprising:
a block header signature obtaining module (401) configured to perform signature processing on block header data of a block to be broadcast according to a local account key of a local node, to obtain a block header signature; and
a block generation right competition module (402) configured to determine a block identifier of the block to be broadcast according to the block header signature, to enable the local node and other nodes in the blockchain network to compete for a block generation right of the block to be broadcast; wherein the local node and the other nodes belong to a mining pool;
wherein, in a case where the local node is the block generation node and administrator of the mining pool, the apparatus (400) further comprises:
an account key updating module configured to perform a block generation operation on the block to be broadcast, and update the local account key for subsequent signature.

7. The blockchain operation apparatus (400) according to claim 6, wherein the block generation right competition module (402) comprises:
a block identifier determination unit configured to determine the block identifier of the block to be broadcast according to the block header signature, based on a consensus algorithm;
a block generation node determination unit configured to, in a case where the block identifier meets a target requirement, determine that the local node is a block generation node of the block to be broadcast; and
a block header signature changing unit configured to, in a case where the block identifier does not meet the target requirement, change the block header signature and redetermine the block identifier of the block to be broadcast, until it is determined that the local node is the block generation node of the block to be broadcast, or it is learned that another node is the block generation node of the block to be broadcast.

8. The blockchain operation apparatus (400) according to claim 7, wherein the block header signature changing unit comprises:
a signature random number adjustment subunit configured to adjust a signature random number in a signature algorithm; and
a block header signature changing subunit configured to perform the signature processing on the block header data of the block to be broadcast according to the signature random number and the local account key, to change the block header signature.

9. The blockchain operation apparatus (400) according to claim 7, wherein the block header signature changing unit comprises:
a block random number adjustment subunit configured to adjust a block random number in the block header data; and
a block header signature changing subunit configured to perform the signature processing on the adjusted block header data according to the local account key, to change the block header signature.

10. The blockchain operation apparatus (400) according to any one of claims 7 to 9, wherein the consensus algorithm includes a proof of work POW algorithm.

11. The blockchain operation apparatus (400) according to any one of claims 6 to 10, wherein, in a case where the local node is the block generation node, the apparatus (400) further comprises:
an element transfer transaction request generation module configured to generate an element transfer transaction request according to an own blockchain account, an element management account and a transfer amount; an activity of the element management account being lower than that of the blockchain account; and
an element transfer transaction request transmission module configured to transmit the element transfer transaction request to the blockchain network so that the element transfer transaction request is processed by a subsequent block generation node, to transfer elements to be transferred in the blockchain account to the element management account.

12. An electronic device, comprising:
at least one processor (501); and
a memory (502) communicatively connected to the at least one processor (501); wherein,
the memory (502) stores instructions executable by the at least one processor (501), the instructions being executed by the at least one processor (501) to enable the at least one processor (501) to perform the blockchain operation method according to any one of claims 1 to 5.

13. A non-transitory computer-readable storage medium storing computer instructions, wherein the computer instructions cause a computer to perform the blockchain operation method according to any one of claims 1 to 5.

## Patentansprüche

1. Ein Blockchain-Betriebsverfahren, das die folgenden Schritte umfasst:
Durchführen (S101) einer Signaturverarbeitung an Blockkopfdaten eines zu sendenden Blocks gemäß einem lokalen Kontoschlüssel eines lokalen Knotens, um eine Blockkopfsignatur zu erhalten; und
Bestimmen (S102) einer Blockkennung des zu sendenden Blocks gemäß der Blockkopfsignatur, um den lokalen Knoten und andere Knoten in einem Blockchain-Netzwerk in die Lage zu versetzen, um ein Blockerzeugungsrecht des zu sendenden Blocks zu konkurrieren; wobei der lokale Knoten und die anderen Knoten zu einem Mining-Pool gehören;
wobei in einem Fall, in dem der lokale Knoten der Blockerzeugungsknoten und Administrator von des Mining-Pools ist, das Verfahren ferner
umfasst:
Durchführen einer Blockerzeugungsoperation an dem zu verbreitenden Block und Aktualisieren des lokalen Kontoschlüssels für die nachfolgende Signatur.

2. Blockchain-Betriebsverfahren nach Anspruch 1, wobei das Bestimmen des Block-Identifikators des zu sendenden Blocks gemäß der Block-Header-Signatur, um den lokalen Knoten und die anderen Knoten des Blockchain-Netzwerks in die Lage zu versetzen, um das Blockerzeugungsrecht des zu sendenden Blocks zu konkurrieren, die folgenden Schritte umfasst:
Bestimmen (S202) des Block-Identifikators des zu übertragenden Blocks gemäß der Block-Header-Signatur Blockkopfsignatur, basierend auf einem Konsensalgorithmus;
in einem Fall, in dem der Block-Identifikator eine Zielanforderung erfüllt, Bestimmen (S204), dass der lokale Knoten ein Blockerzeugungsknoten des zu übertragenden Blocks ist; und
in einem Fall, in dem der Block-Identifikator die Zielanforderung nicht erfüllt, Ändern (S207) der Blockkopfsignatur und erneutes Bestimmen des Block-Identfikators des zu übertragenden Blocks, bis festgestellt wird, dass der lokale Knoten der Blockerzeugungsknoten des zu übertragenden Blocks ist, oder festgestellt wird, dass ein anderer Knoten der Blockerzeugungsknoten des zu übertragenden Blocks ist.

3. Blockchain-Betriebsverfahren nach Anspruch 2, wobei das Ändern der Block Header-Signatur umfasst:
das Anpassen einer Signatur-Zufallszahl in einem Signatur-Algorithmus; und
Durchführen der Signaturverarbeitung an den Blockkopfdaten des zu verbreitenden Blocks gemäß der Signaturzufallszahl und dem lokalen Kontoschlüssel, um die Blockkopfsignatur zu ändern, oder
wobei das Ändern der Blockkopfsignatur umfasst:
Einstellen einer Blockzufallszahl in den Blockkopfdaten; und
Durchführen der Signaturverarbeitung an den angepassten Blockkopfdaten gemäß dem lokalen Kontoschlüssel, um die Blockkopfsignatur zu ändern.

4. Blockchain-Betriebsverfahren nach Anspruch 2 oder 3, wobei der Konsens-Algorithmus einen Proof-of-Work-(POW-)Algorithmus enthält.

5. Das Blockchain-Betriebsverfahren nach einem der Ansprüche 1 bis 4, wobei in einem Fall, in dem in dem der lokale Knoten der Blockerzeugungsknoten ist, das Verfahren ferner umfasst:
Erzeugen einer Elementtransfer-Transaktionsanforderung gemäß einem eigenen Blockchain-Konto, einem Elementverwaltungskonto und einem Transferbetrag; wobei eine Aktivität des Elementverwaltungskontos niedriger ist als die des Blockchain-Kontos; und
Übertragen der Elementtransfer-Transaktionsanforderung an das Blockchain-Netzwerk, so dass die Elementtransfer-Transaktionsanforderung von einem nachfolgenden Blockerzeugungsknoten verarbeitet wird, um auf dem Blockchain-Konto zu übertragende Elemente auf das Elementverwaltungskonto zu übertragen.

6. Eine Blockchain-Betriebsvorrichtung (400), umfassend
ein Modul (401) zur Erlangung einer Blockkopfsignatur, das so konfiguriert ist, dass es eine Signaturverarbeitung an Blockkopfdaten eines zu übertragenden Blocks gemäß einem lokalen Kontoschlüssel eines lokalen Knotens durchführt, um eine Blockkopfsignatur zu erhalten; und
ein Blockerzeugungsrecht-Wettbewerbsmodul (402), das dazu ausgelegt ist, einen Block-Identifikator des zu übertragenden Blocks gemäß der Blockkopfsignatur zu bestimmen, um den lokalen Knoten und andere Knoten in dem Blockchain-Netzwerk in die Lage zu versetzen, um ein Blockerzeugungsrecht des zu übertragenden Blocks zu konkurrieren; wobei der lokale Knoten und die anderen Knoten zu einem Mining-Pool gehören;
wobei in einem Fall, in dem der lokale Knoten der Blockerzeugungsknoten und Administrator des Mining-Pools ist die Blockchain-Betriebsvorrichtung (400) ferner umfasst:
ein Kontoschlüssel-Aktualisierungsmodul, das so konfiguriert ist, dass es eine Blockerzeugungsoperation an dem Block durchzuführen und den lokalen Kontoschlüssel für die nachfolgende Signatur zu aktualisieren.

7. Die Blockchain-Betriebsvorrichtung (400) nach Anspruch 6, wobei das Blockerzeugungs-Wettbewerbsmodul (402) umfasst:
eine Block-Identifikator-Bestimmungseinheit, die dazu ausgelegt ist, den Block-Identifikator des Blocks zu bestimmen des zu sendenden Blocks gemäß der Blockkopfsignatur auf der Grundlage eines Konsensalgorithmus zu bestimmen;
eine Blockerzeugungsknoten-Bestimmungseinheit, die dazu eingerichtet ist, in einem Fall, in dem die Blockidentifizierung eine Zielanforderung erfüllt, zu bestimmen, dass der lokale Knoten ein Blockerzeugungsknoten des zu sendenden Blocks ist gesendet werden soll; und
eine Blockkopfsignatur-Änderungseinheit, die so konfiguriert ist, dass sie in einem Fall, in dem der Block-Identifikator die Blockkopfsignatur zu ändern und die Blockkennung neu zu bestimmen, falls die Blockkennung die Zielanforderung nicht erfüllt, Indendifikator des zu übertragenden Blocks neu zu bestimmen, bis festgestellt wird, dass der lokale Knoten der Blockerzeugungsknoten Blockgenerierungsknoten des zu übertragenden Blocks ist, oder bis festgestellt wird, dass ein anderer Knoten der Blockgenerierungsknoten des zu übertragenden Blocks ist.

8. Blockchain-Betriebsvorrichtung (400) nach Anspruch 7, wobei die Blockkopf-Signaturänderungseinheit umfasst:
eine Untereinheit zum Einstellen einer Signatur-Zufallszahl, die dazu ausgelegt ist,
eine Signatur-Zufallszahl einzustellen in einem Signaturalgorithmus; und
eine Untereinheit zum Ändern der Blockkopfsignatur, die dazu ausgelegt ist, die Signaturverarbeitung an den Blockkopfdaten des zu sendenden Blocks gemäß der Signaturzufallszahl und dem lokalen Kontoschlüssel durchzuführen, um die Blockkopfsignatur zu ändern.

9. Blockchain-Betriebsvorrichtung (400) nach Anspruch 7, wobei die Blockkopf-Signaturänderungseinheit umfasst:
eine Untereinheit zur Einstellung der Blockzufallszahl, die dazu ausgelegt ist, eine Blockzufallszahl in den Blockkopfdaten einzustellen; und
eine Untereinheit zum Ändern der Blockkopfsignatur, die zum Durchführen der Signaturverarbeitung an den angepassten Blockkopfdaten gemäß dem lokalen Kontoschlüssel durchzuführen, um die Blockkopfsignatur zu ändern.

10. Blockchain-Betriebsvorrichtung (400) nach einem der Ansprüche 7 bis 9, wobei der Konsensalgorithmus einen POW-Algorithmus (Proof of Work) umfasst.

11. Blockchain-Betriebsvorrichtung (400) nach einem der Ansprüche 6 bis 10, wobei, in einem Fall, in dem der lokale Knoten der Blockerzeugungsknoten ist, die Blockchain-Betriebsvorrichtung (400) ferner umfasst:
ein Elementtransfer-Transaktionsanforderungs-Erzeugungsmodul, das so konfiguriert ist, dass es eine Element-Transfer-Transaktionsanforderung gemäß einem eigenen Blockchain-Konto, einem Elementverwaltungs-Blockchain-Konto, einem Elementverwaltungskonto und einem Transferbetrag zu erzeugen;
wobei eine Aktivität des Elementverwaltungskontos geringer ist als die des Blockchain-Kontos; und
ein Elementtransfer-Transaktionsanforderungs-Sendemodul, das so konfiguriert ist, dass es die Elementtransfer-Transaktionsanforderung an das Blockchain-Netzwerk zu überträgt, so dass die Elementtransfer-Transaktionsanforderung
von einem nachfolgenden Blockerzeugungsknoten verarbeitet wird, um zu übertragende Elemente in dem Blockchain-Konto auf das Elementverwaltungskonto zu übertragen.

12. Eine elektronische Vorrichtung, die Folgendes umfasst:
mindestens einen Prozessor (501); und
einen Speicher (502), der kommunikativ mit dem mindestens einen Prozessor (501) verbunden ist;
wobei, der Speicher (502) Anweisungen speichert, die von dem mindestens einen Prozessor (501) ausführbar sind, wobei die Anweisungen durch den mindestens einen Prozessor (501) ausgeführt werden, um den mindestens einen Prozessor (501) in die Lage zu versetzen, das Blockchain-Betriebsverfahren gemäß einem der Ansprüche 1 bis 5 durchzuführen.

13. Nicht-transitorisches computerlesbares Speichermedium, das Computerbefehle speichert, wobei die Computerbefehle einen Computer veranlassen, das Blockchain-Betriebsverfahren gemäß einem der Ansprüche 1 bis 5 durchzuführen.

## Revendications

1. Procédé de fonctionnement se rapportant à une chaîne de blocs, comportant les étapes consistant à :
effectuer (S101) un traitement de signature sur des données d'en-tête de bloc d'un bloc devant être diffusé en fonction d'une clé locale de compte d'un noeud local, pour obtenir une signature d'entête de bloc ; et
déterminer (S 102) un identifiant de bloc du bloc devant être diffusé en fonction de la signature d'en-tête de bloc, pour permettre au noeud local et à d'autres noeuds dans un réseau de chaînes de blocs de rivaliser pour un droit de génération de bloc du bloc devant être diffusé ; dans lequel le noeud local et les autres noeuds appartiennent à une coopérative de mineurs ;
dans lequel, dans un cas de figure où le noeud local est le noeud de génération de bloc et l'administrateur de la coopérative de mineurs, le procédé comporte par ailleurs les étapes consistant à :
effectuer une opération de génération de bloc sur le bloc devant être diffusé, et mettre à jour la clé locale de compte pour une signature ultérieure.

2. Procédé de fonctionnement se rapportant à une chaîne de blocs selon la revendication 1, dans lequel l'étape consistant à déterminer l'identifiant de bloc du bloc devant être diffusé en fonction de la signature d'en-tête de bloc, pour permettre au noeud local et aux autres noeuds du réseau de chaînes de blocs de rivaliser pour le droit de génération de bloc du bloc devant être diffusé comporte les étapes consistant à :
déterminer (S202) l'identifiant de bloc du bloc devant être diffusé en fonction de la signature d'en-tête de bloc, en se basant sur un algorithme de consensus ;
dans un cas de figure où l'identifiant de bloc satisfait à une exigence cible, déterminer (S204) comme quoi le noeud local est un noeud de génération de bloc du bloc devant être diffusé ; et
dans un cas de figure où l'identifiant de bloc ne satisfait pas à l'exigence cible, changer (S207) la signature d'en-tête de bloc et redéterminer l'identifiant de bloc du bloc devant être diffusé, jusqu'à ce qu'il soit déterminé que le noeud local est le noeud de génération de bloc du bloc devant être diffusé, ou jusqu'à ce que l'on apprenne qu'un autre noeud est le noeud de génération de bloc du bloc devant être diffusé.

3. Procédé de fonctionnement se rapportant à une chaîne de blocs selon la revendication 2, dans lequel l'étape consistant à changer la signature d'en-tête de bloc comporte les étapes consistant à :
ajuster un nombre aléatoire concernant la signature dans un algorithme de signature ; et
effectuer le traitement de signature sur les données d'en-tête de bloc du bloc devant être diffusé en fonction du nombre aléatoire concernant la signature et de la clé locale de compte, pour changer la signature d'en-tête de bloc, ou
dans lequel l'étape consistant à changer la signature d'en-tête de bloc comporte les étapes consistant à :
ajuster un nombre aléatoire concernant le bloc dans les données d'en-tête de bloc ; et
effectuer le traitement de signature sur les données ajustées d'en-tête de blocs en fonction de la clé locale de compte, pour changer la signature d'en-tête de bloc.

4. Procédé de fonctionnement se rapportant à une chaîne de blocs selon la revendication 2 ou la revendication 3, dans lequel l'algorithme de consensus comprend un algorithme de preuve de travail POW.

5. Procédé de fonctionnement se rapportant à une chaîne de blocs selon l'une quelconque des revendications 1 à 4, dans lequel, dans un cas de figure où le noeud local est le noeud de génération de bloc, le procédé comporte par ailleurs les étapes consistant à :
générer une demande de transaction de transfert d'éléments en fonction d'un propre compte de chaîne de blocs, d'un compte de gestion d'éléments et d'une quantité de transfert ; une activité du compte de gestion d'éléments étant inférieure par rapport à celle du compte de chaîne de blocs ; et
transmettre la demande de transaction de transfert d'éléments au réseau de chaînes de blocs de telle sorte que la demande de transaction de transfert d'éléments est traitée par un noeud ultérieur de génération de bloc, pour transférer des éléments devant être transférés dans le compte de chaîne de blocs au compte de gestion d'éléments.

6. Appareil de fonctionnement se rapportant à une chaîne de blocs (400), comportant :
un module d'obtention de signature d'en-tête de bloc (401) configuré pour effectuer un traitement de signature sur des données d'en-tête de bloc d'un bloc devant être diffusé en fonction d'une clé locale de compte d'un noeud local, pour obtenir une signature d'en-tête de bloc ; et
un module de compétition de droit de génération de bloc (402) configuré pour déterminer un identifiant de bloc du bloc devant être diffusé en fonction de la signature d'en-tête de bloc, pour permettre au noeud local et à d'autres noeuds dans le réseau de chaînes de blocs de rivaliser pour un droit de génération de bloc du bloc devant être diffusé ; dans lequel le noeud local et les autres noeuds appartiennent à une coopérative de mineurs ;
dans lequel, dans un cas de figure où le noeud local est le noeud de génération de bloc et l'administrateur de la coopérative de mineurs, l'appareil (400) comporte par ailleurs :
un module de mise à jour de clé de compte configuré pour effectuer une opération de génération de bloc sur le bloc devant être diffusé, et pour mettre à jour la clé locale de compte pour une signature ultérieure.

7. Appareil de fonctionnement se rapportant à une chaîne de blocs (400) selon la revendication 6, dans lequel le module de compétition de droit de génération de bloc (402) comporte :
une unité de détermination d'identifiant de bloc configurée pour déterminer l'identifiant de bloc du bloc devant être diffusé en fonction de la signature d'en-tête de bloc, en se basant sur un algorithme de consensus ;
une unité de détermination de noeud de génération de bloc configurée pour, dans un cas de figure où l'identifiant de bloc satisfait à une exigence cible, déterminer comme quoi le noeud local est un noeud de génération de bloc du bloc devant être diffusé ; et
une unité de changement de signature d'en-tête de bloc configurée pour, dans un cas de figure où l'identifiant de bloc ne satisfait pas à l'exigence cible, changer la signature d'en-tête de bloc et redéterminer l'identifiant de bloc du bloc devant être diffusé, jusqu'à ce qu'il soit déterminé que le noeud local est le noeud de génération de bloc du bloc devant être diffusé, ou jusqu'à ce que l'on apprenne qu'un autre noeud est le noeud de génération de bloc du bloc devant être diffusé.

8. Appareil de fonctionnement se rapportant à une chaîne de blocs (400) selon la revendication 7, dans lequel l'unité de changement de signature d'en-tête de bloc comporte :
une sous-unité d'ajustement de nombre aléatoire concernant la signature configurée pour ajuster un nombre aléatoire concernant la signature dans un algorithme de signature ; et
une sous-unité de changement de signature d'en-tête de bloc configurée pour effectuer le traitement de signature sur les données d'en-tête de bloc du bloc devant être diffusé en fonction du nombre aléatoire concernant la signature et de la clé locale de compte, pour changer la signature d'en-tête de bloc.

9. Appareil de fonctionnement se rapportant à une chaîne de blocs (400) selon la revendication 7, dans lequel l'unité de changement de signature d'en-tête de bloc comporte :
une sous-unité d'ajustement de nombre aléatoire concernant le bloc configurée pour ajuster un nombre aléatoire concernant le bloc dans les données d'en-tête de bloc ; et
une sous-unité de changement de signature d'en-tête de bloc configurée pour effectuer le traitement de signature sur les données ajustées d'en-tête de blocs en fonction de la clé locale de compte, pour changer la signature d'en-tête de bloc.

10. Appareil de fonctionnement se rapportant à une chaîne de blocs (400) selon l'une quelconque des revendications 7 à 9, dans lequel l'algorithme de consensus comprend un algorithme de preuve de travail POW.

11. Appareil de fonctionnement se rapportant à une chaîne de blocs (400) selon l'une quelconque des revendications 6 à 10, dans lequel, dans un cas de figure où le noeud local est le noeud de génération de bloc, l'appareil (400) comporte par ailleurs :
un module de génération de demande de transaction de transfert d'éléments configuré pour générer une demande de transaction de transfert d'éléments en fonction d'un propre compte de chaîne de blocs, d'un compte de gestion d'éléments et d'une quantité de transfert ; une activité du compte de gestion d'éléments étant inférieure par rapport à celle du compte de chaîne de blocs ; et
un module de transmission de demande de transaction de transfert d'éléments configuré pour transmettre la demande de transaction de transfert d'éléments au réseau de chaînes de blocs de telle sorte que la demande de transaction de transfert d'éléments est traitée par un noeud ultérieur de génération de bloc, pour transférer des éléments devant être transférés dans le compte de chaîne de blocs au compte de gestion d'éléments.

12. Dispositif électronique, comportant :
au moins un processeur (501) ; et
une mémoire (502) connectée en communication audit au moins un processeur (501) ; dans lequel,
la mémoire (502) stocke des instructions en mesure d'être exécutées par l'au moins un processeur (501), les instructions étant exécutées par l'au moins un processeur (501) pour permettre à l'au moins un processeur (501) d'effectuer le procédé de fonctionnement se rapportant à une chaîne de blocs selon l'une quelconque des revendications 1 à 5.

13. Support de stockage non transitoire lisible par ordinateur stockant des instructions informatiques, dans lequel les instructions informatiques amènent un ordinateur à effectuer le procédé de fonctionnement se rapportant à une chaîne de blocs selon l'une quelconque des revendications 1 à 5.
